# EUROPEAN PATENT SPECIFICATION

(11) **EP 3 669 085 B1**
(45) Date of publication and mention of the grant of the patent: **09.12.2026**
(21) Application number: 18765743.2
(22) Date of filing: 15.08.2018
(51) Int. Cl.: F15B 13/04, F16K 11/07, F16K 31/06, F15B 11/04

(54) **SPOOL VALVE**
SPULENVENTIL
DISTRIBUTEUR À TIROIR

(30) Priority: 15.08.2017 US 201762545886 P
(43) Date of publication of application: 24.06.2020
(73) Proprietor: Danfoss A/S, 6430 Nordborg (DK)
(72) Inventor: LAUER, Peter Maria, Eden Prairie, MN 55347 (US); NAVALE, Rahul, Plymouth, MN 55446 (US)
(74) Representative: Schwan Schorer & Partner mbB
(86) International application number: PCT/IB2018/056148
(87) International publication number: WO 2019/035016

(56) References cited:
- EP-A2- 2 772 373
- GB-A- 2 419 195
- US-A- 3 470 692

## Description

### Introduction

In GB 2 419 195 A there is disclosed a valve as it is defined in the pre-characterizing portion of claim 1. A further valve is shown in EP 2 772 373 A2. Another valve is shown in US 3470692 A1.

Spool valves control the direction of flow of a hydraulic fluid by moving a spool axially along a longitudinal axis within a bore of a valve housing. Spool valves are commonly used to control fluid communication between a pump and a hydraulic actuator (e.g., a hydraulic piston, a hydraulic motor, etc.). Movement of the spool opens and closes fluid communication between various ports defined by the valve housing to direct the hydraulic fluid along various flow paths.

### Summary

The present invention is a valve as it is defined in claim 1. The present invention relates generally to a spool valve for controlling the flow of a hydraulic fluid, and more specifically to a spool for the spool valve. The present invention is a valve including a body defining a bore having a central axis and galleries defined by a plurality of walls, the galleries comprising first and second tank galleries, first and second work galleries, and a central pump gallery located between the first and second tank galleries, and between the first and second work galleries in the direction of the central axis. A spool is positioned within the bore, and the spool includes a central body portion having a central body portion diameter, and a central sealing land positioned between first and second outside sealing lands on the central body portion, each sealing land having a sealing land diameter larger than the central body portion diameter. Solenoids are provided on opposite ends of the spool. The solenoids are configured to axially displace the spool along the central axis between first, second, and third positions. In the first position hydraulic fluid from the central pump gallery is prevented from flowing to the first and second working galleries. In the second position the spool is axially displaced to a first side with respect to the first position and provides a first sealing relationship. In the third position the spool is axially displaced to a second side with respect to the first position and provides a second sealing relationship. The first sealing relationship between the spool and the bore allows fluid to flow from the central pump gallery into both the first and second work galleries simultaneously. The second sealing relationship between the spool and the bore allows fluid to flow from the first and second work galleries into the first and second tank galleries simultaneously. The first and second work galleries can be both fluidly connected to a service port of a hydraulic cylinder. In one example, the central sealing land has an axial length that is 10% to 100% of an axial length of the first outside sealing land. In another example, the central sealing land has an axial length that is 10% to 100% of an axial length of the second outside sealing land. In another example, the central body portion diameter is 0% to 99% the sealing land diameter. In one example, the central body portion includes a first outside segment between the first outside sealing land and a first peripheral sealing land, a central segment between the central sealing land and the first outside sealing land, and a second outside segment between the second outside sealing land and a second peripheral sealing land. In one example, the central segment has an axial length that is 10% to 100% an axial length of the first outside segment. In another example, the central segment has an axial length that is 10% to 100% an axial length of the second outside segment.

In one example, the valve is a proportional hydraulic valve.

In one example, at least one of the sealing lands includes one or more notches around an edge of a surface perpendicular to the central body portion of the spool.

A variety of additional aspects will be set forth in the description that follows. The aspects can relate to individual features and to combinations of features. It is to be understood that both the foregoing general description and the following detailed description are exemplary and explanatory only and are not restrictive of the broad inventive concepts upon which the embodiments disclosed herein are based.

### Brief Description of the Drawings

The following drawings are illustrative of particular embodiments of the present invention and therefore do not limit the scope of the present invention. The drawings are not to scale and are intended for use in conjunction with the explanations in the following detailed description. Embodiments of the present invention will hereinafter be described in conjunction with the appended drawings, wherein like numerals denote like elements.
FIG. 1 is a side sectional view of an exemplary spool valve in a first position.
FIG. 2 is a diagram showing the spool valve of FIG. 1 in the first position.
FIG. 3 is a side sectional view of the spool valve in a second position.
FIG. 4 is a diagram showing the spool valve of FIG. 3 in the second position.
FIG. 5 is a side sectional view of the spool valve in a third position.
FIG. 6 is a diagram showing the spool valve of FIG. 5 in the third position.
FIG. 7 is a test setup for a proportional 4/3 way valve.
FIG. 8 is a perspective view of an exemplary spool.
FIG. 9 is a perspective view of another exemplary spool having notches.
FIG. 10 is a side sectional view of the spool of FIG. 9 in a spool valve body.
FIG. 11 is perspective sectional view of the spool of FIG. 9 in a spool valve body.
FIG. 12 is a dimensioned drawing of an exemplary spool.

### Detailed Description

The technology described below has application in systems that utilize hydraulic actuators. In one possible configuration and by non-limiting example, the hydraulic actuator is a hydraulic cylinder that includes an displaceable piston for providing a unidirectional force when actuated by a hydraulic fluid. Such hydraulic actuators are commonly used in industrial equipment and construction equipment (e.g., excavators, booms, lifts, swing arms, pivot mechanisms, etc.). It is contemplated, however, that the actuator can be any type of hydraulic actuator including, for example, a hydraulic motor.

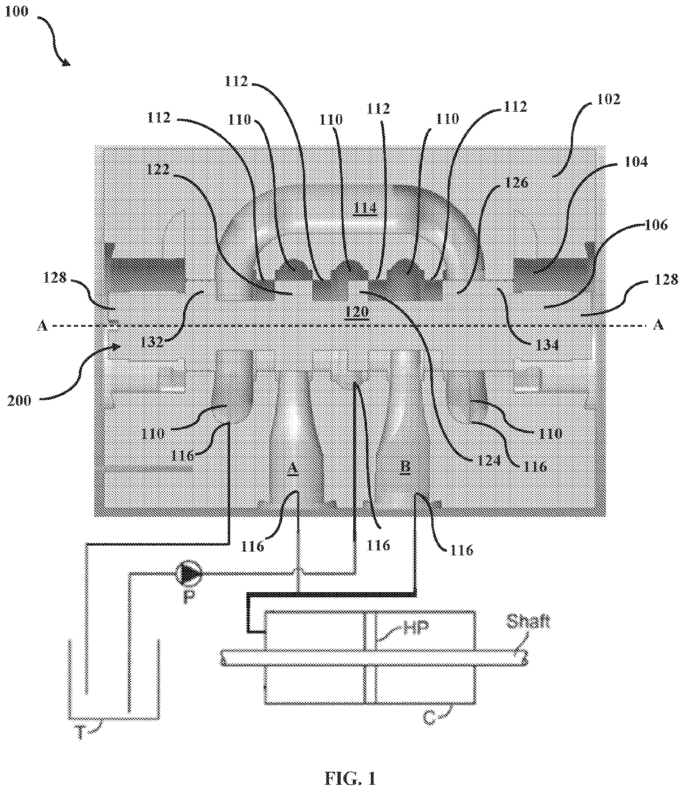

FIG. 1 is a side sectional view of a spool valve 100 in a first position 200. The spool valve 100 includes a spool valve body 102 defining abore 104. A spool 106 is located within the bore 104. The bore 104 is surrounded by a number of galleries 110 that define flow paths for hydraulic fluid depending on the position of the spool 106. The spool 106 is axially moveable along a body axis A-A of the spool valve body 102, either via solenoids 128 positioned on either side of the spool 106 such that when a right-side solenoid 128 is activated, the spool 106 is pushed to the left side of the bore 104, and when a left-side solenoid 128 is activated, the spool 106 is pushed to the right side of the bore 104.

The shape of each gallery 110 is that of an annular cavity that is open on its inner side to the bore 104. Each gallery 110 is separated by a wall 112 and is connected to a port 116 which connects to a particular hydraulic system component via a dedicated hydraulic fluid line. The outer-most galleries 110 are tank galleries that are connected to one or more hydraulic fluid reservoirs or tanks T. A pressure equalizing channel or flow passage 114 connects the tank galleries 110 together. A central pump gallery 110 connects to a pump P outlet for delivery of hydraulic fluid to the bore 104. The other galleries 110 are first and second work galleries connected to service ports A and B of a hydraulic actuator. A flow arrangement merges the flow of hydraulic fluid from the service ports A and B before it reaches the hydraulic actuator. In the example embodiment depicted in FIG. 1, the hydraulic actuator is a cylinder C having a hydraulic piston HP disposed therein. Referring still to FIG. 1, the spool 106 includes a number of sealing lands 122, 124, 126 that project radially outward from the spool 106 for sealing the various galleries 110 during operation of the spool valve 100. In this manner, the spool valve 100 controls the various flow paths defined by the galleries 110 by utilizing the sealing lands on the spool 106 that each include a diameter substantially equal to a diameter of the bore 104 within which the spool 106 is disposed. The sealing lands seal the various galleries 110 within the bore 104 by sealing against the walls 112, thereby dictating the path that fluid forced into the bore 104 must take.

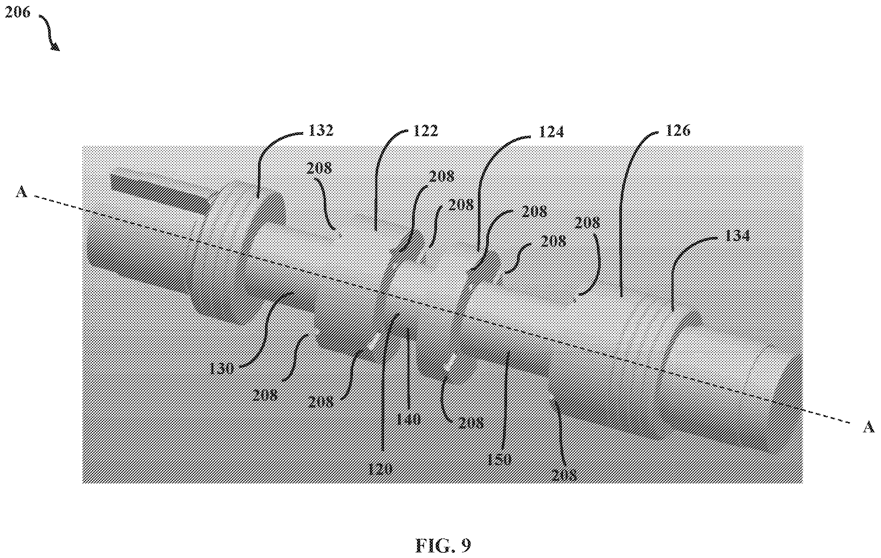

As shown in FIG. 1, a first outside sealing land 122 is located at a first end of the spool 106, a second outside sealing land 126 is located at an opposite end of the spool 106, and a central sealing land 124 is located between the first and second outside sealing lands 122, 126. A central body portion 120 of the spool 106 defines a central body portion diameter 0C (depicted in FIG. 9), and each sealing land 122, 124, and 126 comprises a sealing land diameter 0s (depicted in FIG. 9) that is greater than the central body portion diameter 0c. The space between two sealing lands defines an axial flow passage from the bore 104 to the ports 116. First and second peripheral sealing lands 132, 134 are located outside the first and second outside sealing lands 122, 126 and provide a surface against which the solenoids 128 may bias the spool 106.

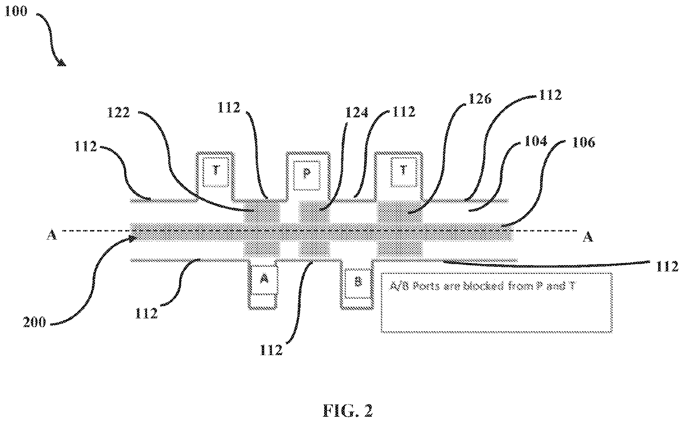

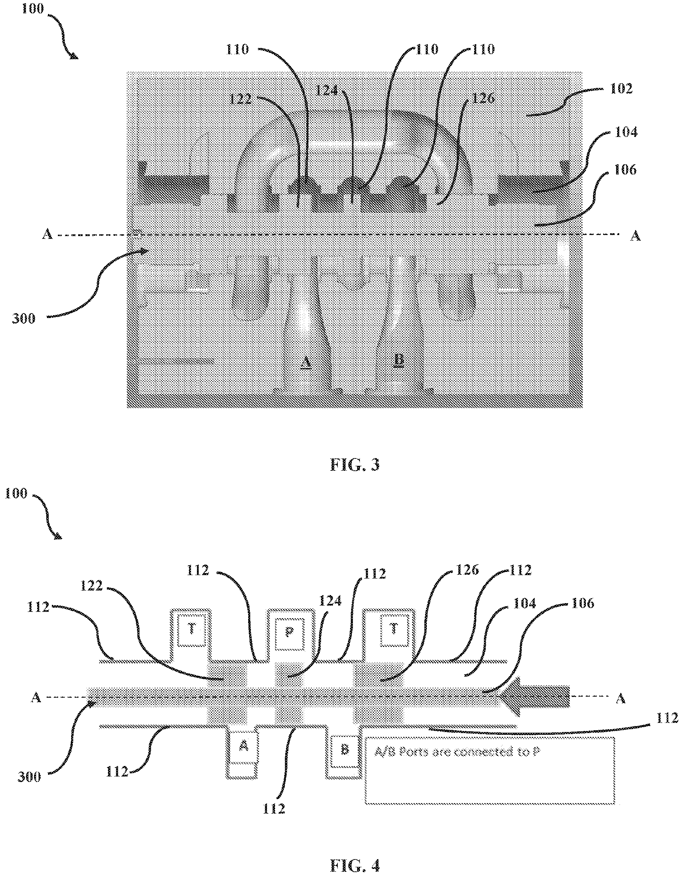

FIG. 2 is a diagram showing the spool valve 100 in the first position 200. In the first position 200, the sealing lands 122, 124, 126 are in a sealing relationship with the walls 112 such that hydraulic fluid is prevented from flowing from the pump P to the service ports A and B of the cylinder C. Accordingly, no fluid may flow into or out of the service ports A and B of the cylinder C, and hydraulic fluid is also prevented from entering the hydraulic fluid tanks T. FIG. 3 is a side sectional view of the spool valve 100 in a second position 300, and
FIG 4 is a diagram showing the spool valve 100 in the second position 300. In the second position 300, the spool 106 is positioned to the left along the body axis A-A with respect to the first position 200. As shown in FIGS. 3 and 4, the sealing lands 122, 124, 126 are in a first sealing relationship with the walls 112 such that hydraulic fluid can flow from the pump P into a volume of the bore 104 defined by the sealing lands and into both service ports A and B of the cylinder C. The hydraulic fluid that flows into the cylinder C drives the hydraulic piston HP from a rested state to an activated state for actuating a component of an industrial equipment. In the second position 300, the hydraulic fluid is prevented from entering the hydraulic fluid tanks T.

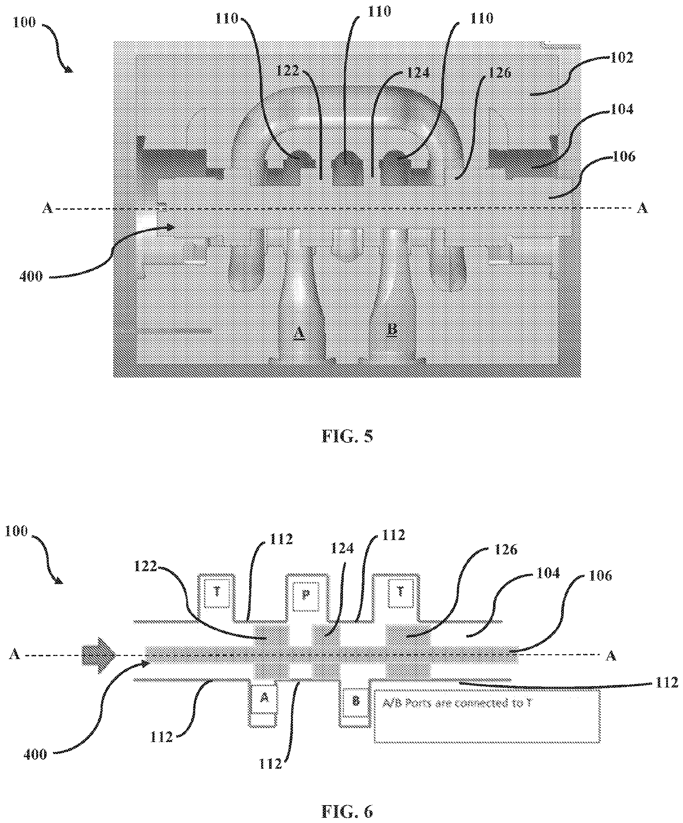

FIG. 5 is a side sectional view of the spool valve 100 in a third position 400, and FIG. 6 is a diagram showing the spool valve 100 in the third position 400. In the third position 400, the spool 106 is positioned to the right along the body axis A-A with respect to the first position 200. As shown in FIGS. 5 and 6, the sealing lands 122, 124, 126 are in a second sealing relationship with the walls 112 such that hydraulic fluid in the cylinder C flows through the bore 104 via the service ports A and B and into the hydraulic fluid tanks T. This returns the hydraulic piston HP from the activated state to the rested state. In the third position 400, hydraulic fluid from the pump P is prevented from entering the service ports A and B of the cylinder C.

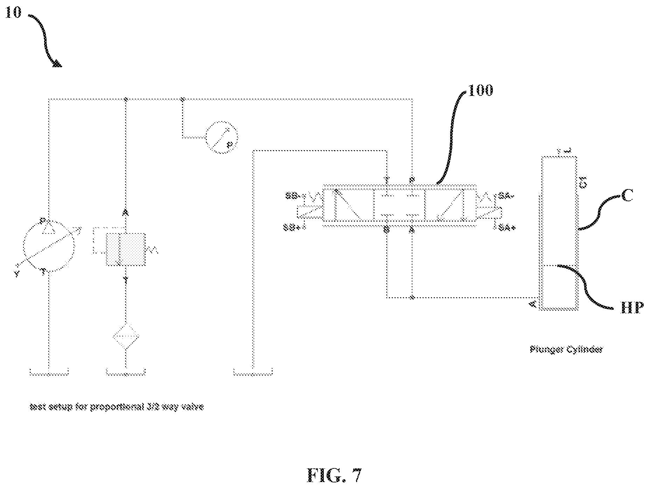

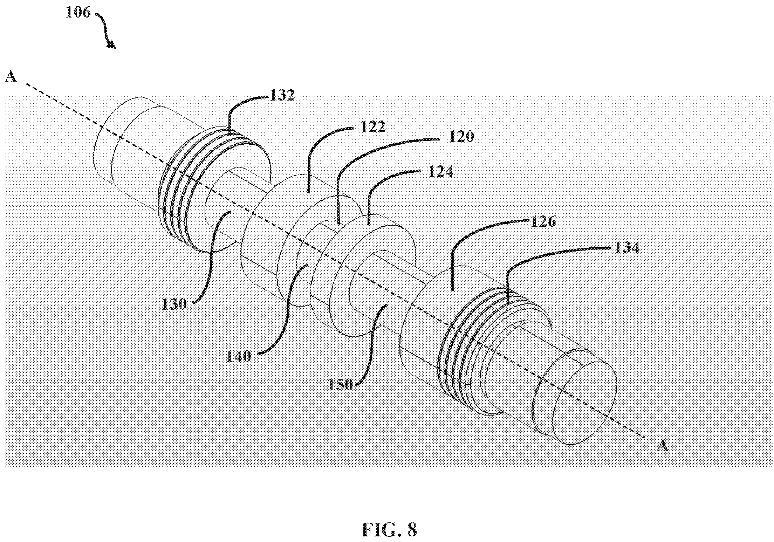

FIG. 7 depicts an exemplary test setup 10 for the spool valve 100. In this example, the spool valve 100 is depicted as a proportional 4/3 way valve. The exemplary test setup 10 includes a pump P for supplying hydraulic fluid to the spool valve 100 and one or more hydraulic fluid reservoirs or tanks T for holding the hydraulic fluid. The spool valve 100 is connected to a cylinder C having a hydraulic piston HP via service ports A and B that merger together for supplying fluid to one side of the cylinder C. In a typical CETOP 5 valve, fluid flow is limited to approximately 70LPM/10bar for a 4/3 way configuration that has two service ports A and B. In a 3/2 configuration, the fluid flow is similarly limited because the service port B is not used. The configuration of the spool 106 of the present invention increases the fluid flow to approximately 120 LPM/IObar by providing the ability to supply hydraulic fluid to both services ports A and B at the same time, while allowing both service ports A and B to drain into the hydraulic fluid tanks T at the same time. Thus, the fluid flow can be increased without increasing the size of the valve and without using a two-stage valve. FIG. 8 is a perspective view of the spool 106 removed from the spool valve 100. The first outside sealing land 122 is located towards a first end of the spool 106, the second outside sealing land 126 located towards an opposite end of the spool 106, and the central sealing land 124 located between the first and second outside sealing lands 122, 126. Also, the first and second peripheral sealing lands 132, 134 are located outside the first and second outside sealing lands 122, 126. The central body portion 120 includes three distinct segments. Each segment is defined as a length of the central body portion 120 between two adjacent sealing lands. A first outside segment 130 is defined as a length between the first peripheral sealing land 132 and the first outside sealing land 122; a central segment 140 is defined as a length between the first outside sealing land 122 and the central sealing land 124; and a second outside segment 150 is defined as a length between the central sealing land 124 and the second outside sealing land 126.

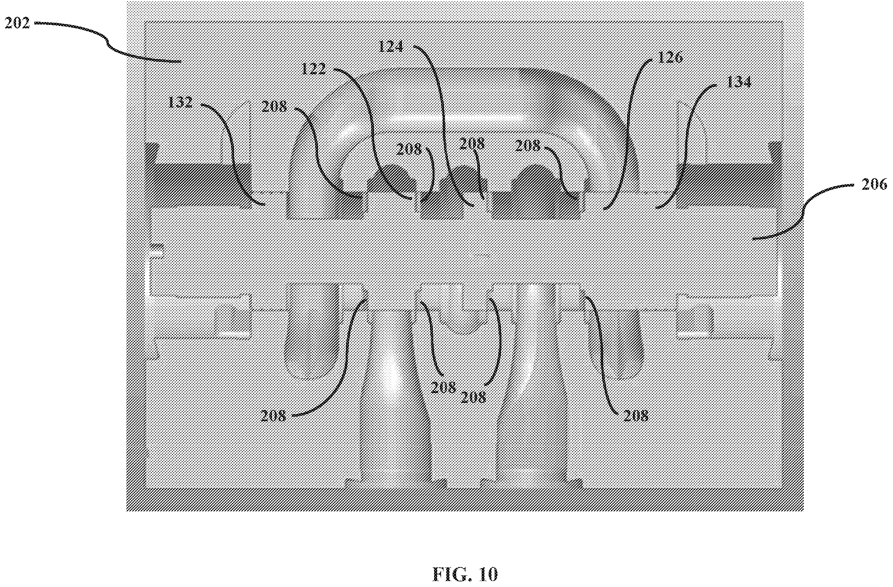

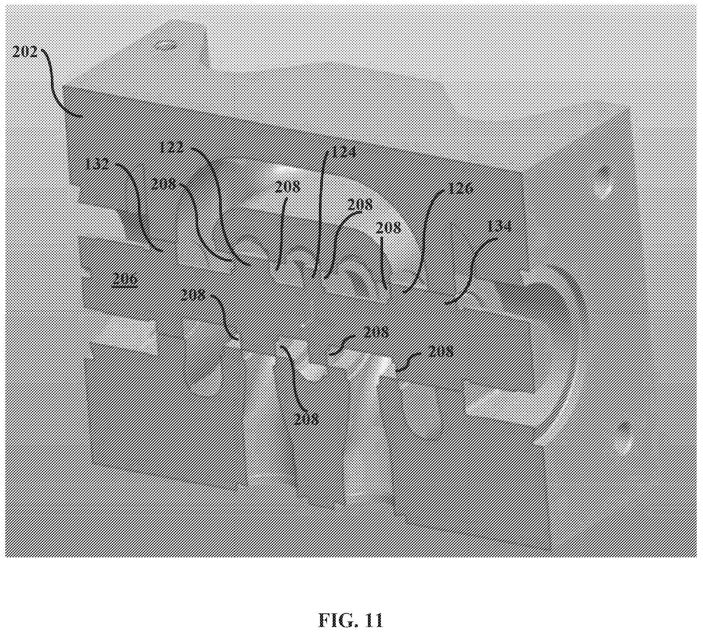

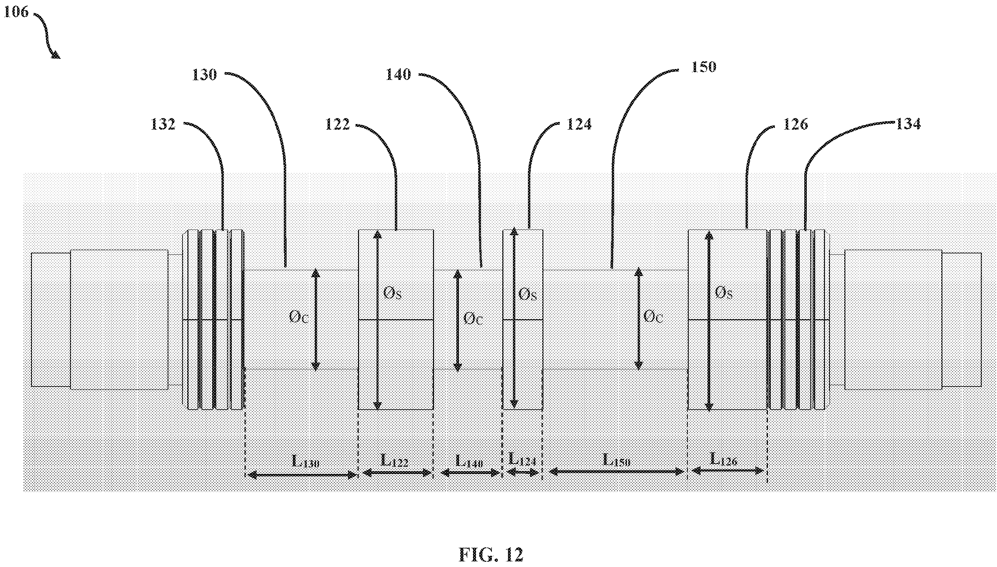

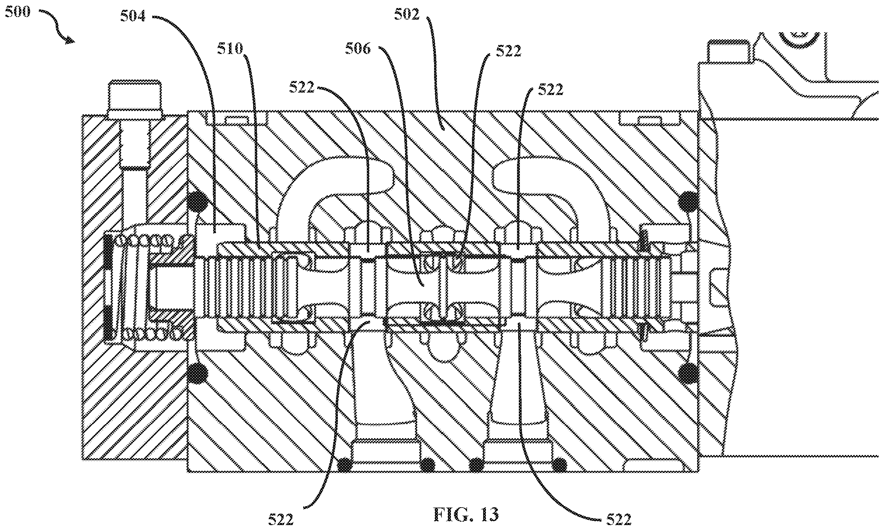

FIG. 9 is a perspective view of another example spool 206 in accordance with the present invention. The spool 206 shares many of the same components as the spool 106 described above. For example, the spool 206 includes a first outside sealing land 122 located towards a first end of the spool 206, a second outside sealing land 126 located towards an opposite end of the spool 206, and a central sealing land 124 located between the first and second outside sealing lands 122, 126. However, the sealing lands 122, 124, 126 on the spool 206 each include one or more notches 208 around the edge of one or more surfaces perpendicular to the central body portion 120 of the spool 206. The notches 208 can increase the metering of the spool 206 by increasing diameter of the axial flow passage between two sealing lands. The number and shape of the notches 208 may vary as needed or desired for a particular application. For example, a surface of a sealing land perpendicular to the central body portion 120 may have 1, 2, 3, 4, or more notches. Furthermore, the notches 208 can be rectangular, triangular, circular, semicircular, compound-circular shaped etc. FIGS. 10 and 11 show the spool 206 in a spool valve body 202. In certain examples the spool 206 can be used in a proportional valve or a similar type of valve. It can also be appreciated that the spool 106 of FIGS. 1-6 can include notches, such as the notches 208 depicted in FIG. 9. FIG. 12 depicts a number of dimensions of the spool 106. The dimensions of the spool 106 may also apply to the spool 206 of FIG. 9. In general, the central body portion diameter 0c is the smallest diameter on the spool 106. In the example of FIG. 12, the central body portion diameter 0c is depicted as approximately the same or equal for each of the segments 130, 140, 150 of the central body portion 120. However, it is contemplated that in other embodiments, the central body portion diameter 0c may vary between the segments 130, 140, 150 such that each segment has a distinct diameter. Also a radius, chamfer, and/or contour can be added to one or more of the segments 130, 140, 150 as needed or desired for a particular application for achieving an optimal performance of the spool 106. FIG. 12 further depicts each of the sealing lands 122, 124, 126 as having a sealing land diameter 0s. The sealing land diameter 0s is the largest diameter on the spool 106, and is typically substantially equal to a wall diameter 0w formed by each wall 1 12 in the bore 104. More accurately, the difference in the sealing land diameter 0s and the wall diameter 0w is minimal, such that the sealing lands 122, 124, 126 may pass through the bore 104 without interference. The tolerance between the sealing lands 122, 124, 126 and the walls 112 forms a seal when these components are aligned, thus dictating the flow of fluid through the bore 104. FIG. 12 further depicts the first outside segment 130 as having an axial length Loo, the central segment 140 as having an axial length L140 , and the second outside segment 150 as having an axial length L150. FIG. 12 also depicts the first outside sealing land 122 as having an axial length L122, the second outside sealing land 126 as having an axial length hue, and the central sealing land 124 as having an axial length L124.

Although many embodiments of the spool are contemplated, those having certain dimensional relationships have displayed highly desirable performance. In certain embodiments, the axial length L124 of the central sealing land 124 may be about 10% to about 100% of the axial length L122 of the first outside sealing land 122. In other embodiments, the axial length L124 of the central sealing land 124 may be about 10% to about 100% of the axial length L126 of the second outside sealing land 126. In certain embodiments, the axial length L140 of the central segment 140 may be about 10% to about 100% the axial length Lno of the first outside segment 130. In other embodiments, the axial length Li4o of the central segment 140 may be about 10% to about 100% the axial length Li5o of the second outside segment 150. Other dimensions are also contemplated. For example, the central body portion diameter 0c may be about 10% to about 99% of the sealing land diameter 0s. It is contemplated that the dimensional relationships described herein may also apply to the spool 206 of FIG. 9.

It is contemplated that a desired valve performance can be achieved in accordance with the valve technology of the present invention by modifying the spool valve body 102 to have similar dimensional relationships as described above with regard to the sealing lands 122, 124, and 126 of the spool 106. For example, modifications to the spool valve body 102 can be made by changing the dimensional relationship between the galleries 110 and the walls 112 such as their location with respect to one another in the bore 104 of the spool valve 100. It is further noted that the various embodiments described above are provided by way of illustration only and should not be construed to limit the claims attached hereto. Those skilled in the art will readily recognize various modifications and changes that may be made without following the example embodiments and applications illustrated and described herein, and without departing from the scope of the following claims.

## Claims

1. A valve (100; 500) comprising:
a body (102; 502) defining a bore (104; 504) having a central axis and galleries (110) defined by a plurality of walls, the galleries comprising first and second tank galleries (110), first and second work galleries (110), and a central pump gallery (110) located between the first and second tank galleries (110), and between the first and second work galleries (110) in the direction of the central axis; and
a spool (106; 206; 506) positioned within the bore (104; 504), the spool having:
a central body portion (120) having a central body portion diameter (Ø_{C}); and
a central sealing land (124) positioned between first and second outside sealing lands (122, 126) on the central body portion (120), each sealing land having a sealing land diameter (Ø_{S}) larger than the central body portion diameter (Ø_{C});
**characterized by**:
solenoids (128) on opposite ends of the spool (106), the solenoids configured to axially displace the spool along the central axis between first, second, and third positions, wherein in the first position hydraulic fluid from the central pump gallery (110) is prevented from flowing to the first and second working galleries (110) and from flowing to one or more tank galleries (110), in the second position the spool being axially displaced to a first side with respect to the first position and providing a first sealing relationship, and in the third position the spool being axially displaced to a second side with respect to the first position and providing a second sealing relationship,
wherein the first sealing relationship between the spool (106; 506) and the bore (104; 504) allows fluid to flow from the central pump gallery (110) into both the first and second work galleries (110) simultaneously, wherein the second sealing relationship between the spool and the bore allows fluid to flow from the first and second work galleries (110) into the first and second tank galleries (110) simultaneously; and
the first and second work galleries (110) can be both fluidly connected to a service port (A, B) of a hydraulic cylinder (C).

2. The valve (100; 500) of claim 1, wherein the central sealing land (124) has an axial length that is 10% to 100% of an axial length of the first outside sealing land (122).

3. The valve (100; 500) of claim 1, wherein the central sealing land (124) has an axial length that is 10% to 100% of an axial length of the second outside sealing land (126).

4. The valve (100; 500) of claim 1, wherein the central body portion diameter (Ø_{C}) is 10% to 99% the sealing land diameter (Ø_{S}).

5. The valve (100; 500) of claim 1, wherein the central body portion (120) includes a first outside segment (130) between the first peripheral sealing land (132) and the first outside sealing land (122), a central segment (140) between the first outside sealing land (122) and the central sealing land (124), and a second outside segment (150) between the central sealing land (124) and the second outside sealing land (126); and
wherein the central segment (140) has an axial length that is 10% to 100% an axial length of the first outside segment (130).

6. The valve (100; 500) of claim 5, wherein the central segment (140) has an axial length that is 10% to 100% an axial length of the second outside segment (150).

7. The valve (100; 500) of claim 1, wherein the valve is a proportional hydraulic valve.

8. The valve (100; 500) of claim 1, wherein at least one of the sealing lands (122, 124, 126) includes one or more notches (208) around an edge of a surface perpendicular to the central body portion (120) of the spool (206).

## Patentansprüche

1. Ventil (100; 500), umfassend:
einen Körper (102; 502), der eine Bohrung (104; 504) mit einer Mittelachse und Kammern (110) definiert, die durch eine Mehrzahl von Wänden definiert sind, wobei die Kammern eine erste und eine zweite Tankkammer (110), eine erste und eine zweite Arbeitskammer (110) und eine zentrale Pumpenkammer (110) umfassen, die in Richtung der Mittelachse zwischen der ersten und der zweiten Tankkammer (110) und zwischen der ersten und der zweiten Arbeitskammer (110) angeordnet ist; und
einen Schieber (106; 206; 506), der innerhalb der Bohrung (104; 504) positioniert ist, wobei der Schieber Folgendes aufweist:
einen zentralen Körperabschnitt (120) mit einem Durchmesser des zentralen Körperabschnitts (Ø_{C}); und
einen zentralen Dichtsteg (124), der zwischen einem ersten und einem zweiten äußeren Dichtsteg (122, 126) auf dem zentralen Körperabschnitt (120) positioniert ist, wobei jeder Dichtsteg einen Dichtstegdurchmesser (Ø_{S}) aufweist, der größer als der Durchmesser des zentralen Körperabschnitts (Ø_{C}) ist;
**gekennzeichnet durch**:
Elektromagnete (128) an gegenüberliegenden Enden des Schiebers (106), wobei die Elektromagnete dazu ausgelegt sind, den Schieber entlang der Mittelachse zwischen einer ersten, einer zweiten und einer dritten Position axial zu verschieben, wobei in der ersten Position verhindert wird, dass Hydraulikfluid von der zentralen Pumpenkammer (110) zu der ersten und der zweiten Arbeitskammer (110) und zu einer oder mehreren Tankkammern (110) fließt, wobei der Schieber in der zweiten Position gegenüber der ersten Position axial zu einer ersten Seite verschoben ist und eine erste Dichtungsbeziehung herstellt und der Schieber in der dritten Position gegenüber der ersten Position axial zu einer zweiten Seite verschoben ist und eine zweite Dichtungsbeziehung herstellt,
wobei die erste Dichtungsbeziehung zwischen dem Schieber (106; 506) und der Bohrung (104; 504) ermöglicht, dass Fluid von der zentralen Pumpenkammer (110) gleichzeitig sowohl in die erste als auch in die zweite Arbeitskammer (110) fließt, wobei die zweite Dichtungsbeziehung zwischen dem Schieber und der Bohrung ermöglicht, dass Fluid von der ersten und der zweiten Arbeitskammer (110) gleichzeitig in die erste und die zweite Tankkammer (110) fließt; und
wobei die erste und die zweite Arbeitskammer (110) beide mit einem Verbraucheranschluss (A, B) eines Hydraulikzylinders (C) in Fluidverbindung stehen können.

2. Ventil (100; 500) nach Anspruch 1, wobei der zentrale Dichtsteg (124) eine axiale Länge aufweist, die 10 % bis 100 % einer axialen Länge des ersten äußeren Dichtstegs (122) beträgt.

3. Ventil (100; 500) nach Anspruch 1, wobei der zentrale Dichtsteg (124) eine axiale Länge aufweist, die 10 % bis 100 % einer axialen Länge des zweiten äußeren Dichtstegs (126) beträgt.

4. Ventil (100; 500) nach Anspruch 1, wobei der Durchmesser des zentralen Körperabschnitts (Ø_{C}) 10 % bis 99 % des Dichtstegdurchmessers (Ø_{S}) beträgt.

5. Ventil (100; 500) nach Anspruch 1, wobei der zentrale Körperabschnitt (120) ein erstes äußeres Segment (130) zwischen dem ersten peripheren Dichtsteg (132) und dem ersten äußeren Dichtsteg (122), ein zentrales Segment (140) zwischen dem ersten äußeren Dichtsteg (122) und dem zentralen Dichtsteg (124) und ein zweites äußeres Segment (150) zwischen dem zentralen Dichtsteg (124) und dem zweiten äußeren Dichtsteg (126) beinhaltet; und
wobei das zentrale Segment (140) eine axiale Länge aufweist, die 10 % bis 100 % einer axialen Länge des ersten äußeren Segments (130) beträgt.

6. Ventil (100; 500) nach Anspruch 5, wobei das zentrale Segment (140) eine axiale Länge aufweist, die 10 % bis 100 % einer axialen Länge des zweiten äußeren Segments (150) beträgt.

7. Ventil (100; 500) nach Anspruch 1, wobei das Ventil ein hydraulisches Proportionalventil ist.

8. Ventil (100; 500) nach Anspruch 1, wobei mindestens einer der Dichtstege (122, 124, 126) eine oder mehrere Kerben (208) um einen Rand einer zu dem zentralen Körperabschnitt (120) des Schiebers (206) senkrechten Fläche herum beinhaltet.

## Revendications

1. Vanne (100 ; 500) comprenant :
un corps (102 ; 502) définissant un alésage (104 ; 504) ayant un axe central et des galeries (110) définies par une pluralité de parois, les galeries comprenant des première et seconde galeries de réservoir (110), des première et seconde galeries de travail (110), et une galerie de pompe centrale (110) située entre les première et seconde galeries de réservoir (110) et entre les première et seconde galeries de travail (110) dans la direction de l'axe central ; et
un tiroir de distribution (106 ; 206 ; 506) positionné dans l'alésage (104 ; 504), le tiroir de distribution présentant :
une partie de corps centrale (120) présentant un diamètre de partie de corps centrale (Ø_{C}) ; et
une plage d'étanchéité centrale (124) positionnée entre des première et seconde plages d'étanchéité extérieures (122, 126) sur la partie de corps centrale (120), chaque plage d'étanchéité présentant un diamètre de plage d'étanchéité (Ø_{S}) supérieur au diamètre de la partie de corps centrale (Ø_{C}) ;
**caractérisée par** :
des solénoïdes (128) situés sur les extrémités opposées du tiroir de distribution (106), les solénoïdes étant conçus pour déplacer axialement le tiroir de distribution le long de l'axe central entre des première, deuxième et troisième positions, dans laquelle, dans la première position, le fluide hydraulique provenant de la galerie de pompe centrale (110) est empêché de s'écouler vers les première et seconde galeries de travail (110) et de s'écouler vers une ou plusieurs galeries de réservoir (110), dans la deuxième position, le tiroir de distribution est déplacé axialement vers un premier côté par rapport à la première position et fournit une première relation d'étanchéité, et dans la troisième position, le tiroir de distribution est déplacé axialement vers un second côté par rapport à la première position et fournit une seconde relation d'étanchéité,
la première relation d'étanchéité entre le tiroir de distribution (106 ; 506) et l'alésage (104 ; 504) permet au fluide de s'écouler de la galerie de pompe centrale (110) vers les première et seconde galeries de travail (110) simultanément, la seconde relation d'étanchéité entre le tiroir et l'alésage permet au fluide de s'écouler des première et seconde galeries de travail (110) vers les première et seconde galeries de réservoir (110) simultanément ; et
les première et seconde galeries de travail (110) peuvent être en liaison fluidique avec un orifice de service (A, B) d'un vérin hydraulique (C).

2. Vanne (100 ; 500) selon la revendication 1, dans laquelle la plage d'étanchéité centrale (124) a une longueur axiale qui est égale à 10 % à 100 % d'une longueur axiale de la première plage d'étanchéité extérieure (122).

3. Vanne (100 ; 500) selon la revendication 1, dans laquelle la plage d'étanchéité centrale (124) a une longueur axiale qui est égale à 10 % à 100 % d'une longueur axiale de la seconde plage d'étanchéité extérieure (126).

4. Vanne (100 ; 500) selon la revendication 1, dans laquelle le diamètre de la partie de corps centrale (Ø_{CS}) est égal à 10 % à 99 % du diamètre de la plage d'étanchéité (Ø).

5. Vanne (100 ; 500) selon la revendication 1, dans laquelle la partie de corps centrale (120) comprend un premier segment extérieur (130) entre la première plage d'étanchéité périphérique (132) et la première plage d'étanchéité extérieure (122), un segment central (140) entre la première plage d'étanchéité extérieure (122) et la plage d'étanchéité centrale (124), et un second segment extérieur (150) entre la plage d'étanchéité centrale (124) et la seconde plage d'étanchéité extérieure (126) ; et
le segment central (140) présente une longueur axiale qui est égale à 10 % à 100 % d'une longueur axiale du premier segment extérieur (130).

6. Vanne (100 ; 500) selon la revendication 5, dans laquelle le segment central (140) a une longueur axiale qui est égale à 10 % à 100 % d'une longueur axiale du second segment extérieur (150).

7. Vanne (100 ; 500) selon la revendication 1, dans laquelle la vanne est une vanne hydraulique proportionnelle.

8. Vanne (100 ; 500) selon la revendication 1, dans laquelle au moins une des plages d'étanchéité (122, 124, 126) comprend une ou plusieurs encoches (208) autour d'un bord d'une surface perpendiculaire à la partie de corps centrale (120) du tiroir de distribution (206).
